# EUROPÄISCHE PATENTSCHRIFT

(11) **EP 0 676 842 B1**
(45) Veröffentlichungstag und Bekanntmachung des Hinweises auf die Patenterteilung: **06.08.1997**
(21) Anmeldenummer: 94105435.5
(22) Anmeldetag: 08.04.1994
(51) Int. Cl.: H02G 5/06

(54) **Stützisolator**
Supporting insulator
Isolateur de support

(43) Veröffentlichungstag der Anmeldung: 11.10.1995
(73) Patentinhaber: ASEA BROWN BOVERI AG, 5400 Baden (CH)
(72) Erfinder: Schulz, Daniel, CH-8006 Zürich (CH); Vrana, Ales, CH-8805 richterswil (CH)

(56) Entgegenhaltungen:
- EP-A- 0 254 014
- DE-A- 1 615 039
- FR-A- 2 222 735
- GB-A- 1 133 270
- PATENT ABSTRACTS OF JAPAN, vol. 2, no. 99 (E-050), 17. August 1978 & JP-A-53 064 782
- DATABASE WPI, 17. September 1979, Derwent Publications Ltd., London GB; AN 79-G6513B/31 & SU-A-628 539

## Beschreibung

### TECHNISCHES GEBIET

Die Erfindung geht aus von einem Stützisolator gemäss dem Oberbegriff des Patentanspruchs 1.

### STAND DER TECHNIK

Aus der Europäischen Patentschrift 0 288 715 B1 ist ein scheibenförmig ausgebildeter Stützisolator mit einem Isolatorkörper bekannt, der für den Einsatz in gasisolierten Schaltanlagen vorgesehen ist. Der Isolatorkörper ist mit einem Druckmittel beaufschlagbar. Als Druckmittel sind Isoliergase wie beispielsweise SF₆ oder auch Mineralöl vorstellbar. Ferner könnte der Isolator auch mit einem Vakuum beaufschlagt werden. Der Isolatorkörper besteht aus einem gehärteten Giessharz. Durch den Isolatorkörper führt eine Eingussarmatur. Die Eingussarmatur ist im Betrieb mit Hochspannung beaufschlagt und sie führt Strom. Die Eingussarmatur weist eine gewellte Mantelfläche auf, die mit einer druckmitteldicht aufgebrachten Koppelschicht, welche elastisch ausgebildet ist, versehen ist. Der Isolatorkörper ist mit dieser elastischen Koppelschicht vergossen.

Derartige elastisch ausgebildete Koppelschichten sind für Isolatoren mit vergleichsweise kleiner mechanischer Beanspruchung gut geeignet. Für die moderneren Anlagen, in denen die Isolatoren mechanisch, thermisch und dielektrisch immer höher belastet werden, sind derartige elastischen Koppelschichten nicht mehr geeignet, da eine bessere Haftung zwischen der Mantelfläche der Eingussarmatur und dem Isolatorkörper verlangt wird, als dies mit Hilfe der elastischen Koppelschicht möglich ist. Insbesondere muss vermieden werden, dass es im äusseren Randbereich an der Übergangsstelle zwischen Eingussarmatur und Isolatorkörper bei mechanischen Belastungen zu Ablösungen des Isoliermaterials kommt, da hierdurch die Bruchfestigkeit des Isolators stark reduziert wird.

Aus der GB-A-1,133,270 ist ein Isolator für metallgekapselte gasisolierte Schaltanlagen bekannt, der einen scheibenförmigen Isolatorkörper aus einem gehärteten Giessharz aufweist. In diesen Isolatorkörper ist eine stromführende Eingussarmatur aus Metall eingelassen. Am Übergang vom Giessharz des Isolators auf die Eingussarmatur und auch am Übergang vom Giessharz auf die Metallkapselung reduziert sich die Dicke des Giessharzes.

### DARSTELLUNG DER ERFINDUNG

Die Erfindung, wie sie in den unabhängigen Ansprüchen definiert ist, löst die Aufgabe, einen für vergleichsweise hohe mechanische Belastungen ausgelegten Stützisolator zu schaffen, der einfach aufgebaut ist und bei dem Ablösungen des Isoliermaterials von der Eingussarmatur infolge von mechanischen Belastungen ausgeschlossen sind.

Der Stützisolator weist einen scheibenförmigen Isolatorkörper aus gehärtetem Giessharz und mindestens eine mit Hochspannung beaufschlagte, in den Isolatorkörper eingegossene und diesen durchdringende Eingussarmatur auf. Die Eingussarmatur weist eine zylindrisch ausgebildete Mantelfläche auf, welche durch den Isolatorkörper eingeschlossen ist. Bei diesem Stützisolator ist es besonders vorteilhaft, dass an den Isolatorkörper eine sich nach aussen verjüngende, mit der Mantelfläche der Eingussarmatur innig verbundene Lippe angeformt ist.

Besonders vorteilhaft ist es zudem, dass bereits vorhandene Giessformen mit vergleichsweise geringem Aufwand für die Herstellung von in bezüglich Umbruchfestigkeit beträchtlich ertüchtigten Stützisolatoren umgerüstet werden können. Die Lippe wird dafür als eine Flanke einer in den Isolatorkörper eingelassenen, die Eingussarmatur konzentrisch umgebenden Nut ausgebildet. Die Nut weist einen als U-Profil ausgebildeten Querschnitt auf. Das U-Profil ist frei von Kerben ausgebildet.

Die Eingussarmatur ist aus einem elektrisch gut leitfähigen Metall oder einer Metallegierung gefertigt, sie weist eine versilberte Oberfläche auf. Eine besonders gute Haftung des Isolatorkörpers auf der Eingussarmatur wird dadurch erreicht, dass die Mantelfläche der Eingussarmatur vor dem Eingiessen in den Isolatorkörper aufgerauht und mit einem entfettenden Lösungsmittel gereinigt wird.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Fig.1 einen schematisch dargestellten Teilschnitt durch eine erste Ausführungsform eines scheibenförmigen Stützisolators,
Fig.2 einen schematisch dargestellten Teilschnitt durch eine zweite Ausführungsform eines scheibenförmigen Stützisolators, und
Fig.3 eine schematisch dargestellte Ausführungsform des Oberflächenprofils der Eingiessarmatur eines scheibenförmigen Stützisolators.

Bei allen Figuren sind gleich wirkende Elemente mit gleichen Bezugszeichen versehen. Alle für das unmittelbare Verständnis der Erfindung nicht erforderlichen Elemente sind nicht dargestellt.

### WEGE ZUR AUSFÜHRUNG DER ERFINDUNG

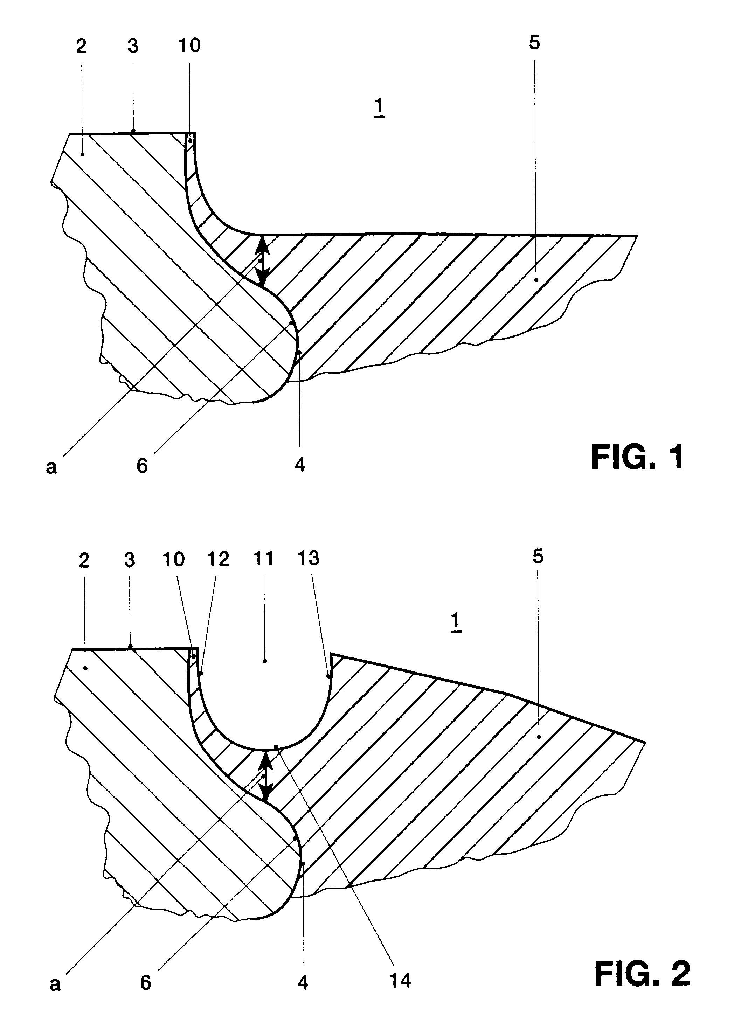

Die Fig.1 zeigt einen schematisch dargestellten Teilschnitt durch eine erste Ausführungsform eines scheibenförmig ausgebildeten Stützisolators 1, wie er beispielsweise in gasisolierten Schaltanlagen eingesetzt wird, um die Aktivteile gegen die geerdete Kapselung abzustützen. Der Stützisolator 1 weist mindestens eine Eingussarmatur 2 aus Metall auf. Vorzugsweise ist diese Eingussarmatur 2 aus einer Aluminiumlegierung gefertigt und weist eine versilberte Oberfläche auf. Für eine einpolig gekapselte gasisolierte Schaltanlage ist pro Stützisolator 1 eine Eingussarmatur 2 vorgesehen, für eine dreipolig gekapselte gasisolierte Schaltanlage werden pro Stützisolator 1 drei entsprechend der Betriebsspannung der gasisolierten Schaltanlage voneinander beabstandete Eingussarmaturen 2 benötigt. Die Eingussarmatur 2 weist beidseitig jeweils eine ebene Stirnfläche 3 auf, die mit nicht dargestellten Befestigungsmöglichkeiten für die an sie anzuschliessenden Aktivteile versehen ist. Bei einer einpolig gasisolierten Schaltanlage durchdringt die Mittelachse des scheibenförmigen Stützisolators 1 die Eingussarmatur 2 in der Mitte und verläuft senkrecht zur Stirnfläche 3 der Eingussarmatur 2. Die Eingussarmatur 2 weist eine Mantelfläche 4 auf, mit welcher der Isolatorkörper 5 des scheibenförmigen Stützisolators vergossen ist. Vor dem Giessvorgang wurde die Mantelfläche 4 der versilberten Eingussarmatur 2 mit Korund gestrahlt und anschliessend in einem entsprechenden Lösungsmittelbad sorgfältig entfettet.

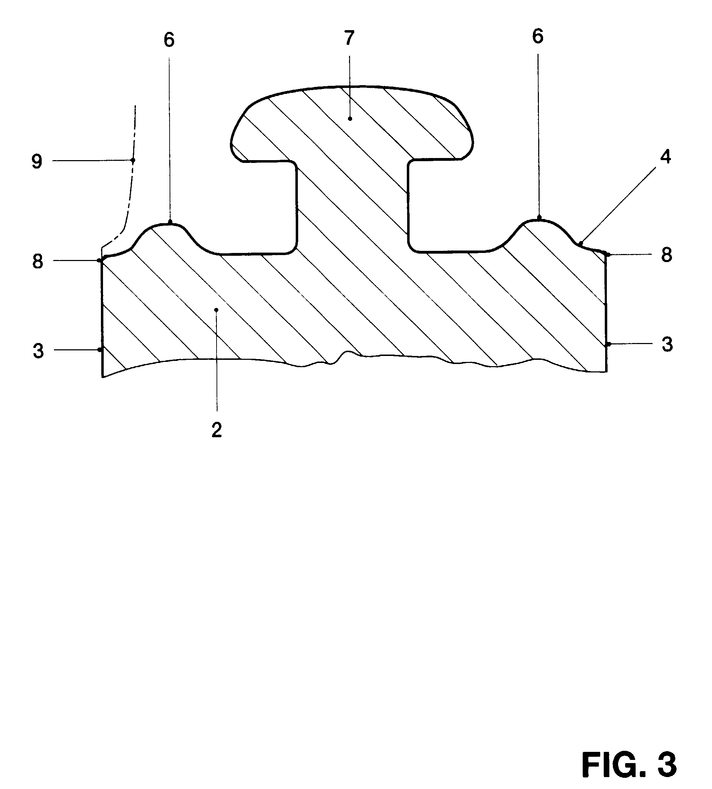

Die Mantelfläche 4 der zylindrisch ausgebildeten Eingussarmatur 2 ist gewellt ausgebildet, wie der Teilschnitt in Fig.3 zeigt. Hier sind beispielsweise lediglich zwei Wellen 6 dargestellt. Eine im Querschnitt etwa pilzförmig ausgebildete Elektrode 7 umgibt die Eingussarmatur 2 konzentrisch. Diese Elektrode 7 dient vorwiegend der dielektrisch günstigen Ausbildung des im Betrieb der gasisolierten Schaltanlage den Stützisolator 1 beaufschlagenden elektrischen Feldes. Die Elektrode 7 kann entweder, wie hier schematisch dargestellt, als Teil der Eingussarmatur 2 ausgebildet sein oder auch aus verschiedenen elektrisch leitenden Materialien gefertigt sein, wie beispielsweise aus leitendem Kunststoff oder aus einem mit der Eingussarmatur 2 verschraubten Metallblechring, welcher das entsprechende Profil aufweist. Als Übergang von der Mantelfläche 4 zu den Stirnflächen 3 ist jeweils ein vergleichsweise kleiner Radius 8 vorgesehen. Eine strichpunktierte Linie 9 deutet in Fig.3 einen Teil der Aussenkontur des Isolatorkörpers 5 an. An den Isolatorkörper 5 ist, wie aus Fig.1 ersichtlich, auf beiden Seiten jeweils eine, sich nach aussen in Richtung der Stirnflächen 3 verjüngende, mit der Mantelfläche 4 der Eingussarmatur 2 vergossene Lippe 10 angeformt. Die Formgebung der an die jeweilige Lippe 10 angrenzenden Welle 6 der Eingussarmatur 2 bestimmt zusammen mit der Formgebung der Oberfläche des Isolatorkörpers 5 die Form der sich verjüngenden Lippe 10.

Die Fig.2 zeigt einen schematisch dargestellten Teilschnitt durch eine zweite Ausführungsform eines scheibenförmigen Stützisolators 1. Bei diesem Stützisolator 1 begrenzt die Lippe 10 eine in den Isolatorkörper 5 eingelassene Nut 11, die einen U-förmigen Querschnitt aufweist. Dieser scheibenförmige Stützisolator 1 wird durch die Nut 11 bezüglich seiner mechanischen Festigkeit wesentlich verbessert im Vergleich zu einem Stützisolator, der ohne diese Nut gegossen wurde. Die Flanken 12 und 13 der Nut 11 und deren Nutgrund 14 sind glatt und ohne Kerben ausgebildet, sodass keine zusätzliche Kerbwirkung den scheibenförmigen Stützisolator 1 mechanisch schwächen kann. In bestehende Giessformen für herkömmliche Stützisolatoren kann sehr einfach das die Nut 11 erzeugende U-Profil eingelegt werden, wodurch auf vergleichsweise preisgünstige Art eine Form für das Giessen eines mechanisch wesentlich widerstandsfähigeren scheibenförmigen Stützisolators 1 geschaffen wird.

In den Fig.1 und 2 ist jeweils ein Abstand a angegeben, der sich parallel zur Mittelachse des Stützisolators 1 erstreckt und der von dem Auslauf der Lippe 10 bzw. vom Nutgrund 14 einerseits und von der Oberfläche der Welle 6 andererseits begrenzt wird. Wird der Abstand a im Bereich von 5mm gewählt, was für die Mehrheit der heute für Stützisolatoren verwendeten aushärtbaren Giessharze sinnvoll ist, so verjüngt sich die Lippe 10 bzw. die dieser entsprechende Flanke 12 der Nut 11 bis auf Dicken von minimal etwa 0,5mm. Der sich vom Abstand a aus verjüngende Querschnitt der Lippe 10 ist so ausgelegt, dass er keine der auf den Isolatorkörper 5 einwirkenden Biegespannungen bis nach aussen zum dünnen Ende der Lippe 10 übertragen kann. Die in die Lippe 10 bzw. die dieser entsprechende Flanke 12 der Nut 11 auslaufende Randzone des Isolatorkörpers 5 ist damit sehr wirksam gegenüber dem eigentlichen Isolatorkörper 5 mechanisch entkoppelt.

Zur Erläuterung der Wirkungsweise wird nun die Figur 1 etwas näher betrachtet. Der scheibenförmige Stützisolator 1 wird durch Reaktionskräfte, die beispielsweise von der Eingussarmatur 2 her auf den Isolatorkörper 5 übertragen werden, oder durch Kräfte infolge einer Druckdifferenz zwischen den beiden durch den Stützisolator 1 voneinander getrennten Druckräumen der gasisolierten Schaltanlage belastet. Die Mantelfläche 4 der Eingussarmatur 2 ist als gewellte Fläche ausgebildet und kann deshalb die axial wirkenden Kräfte aufnehmen, ohne dass es zu einem Abgleiten des Isolatorkörpers 5 von der Mantelfläche 4 kommt. Zusätzlich ist der scheibenförmige Stützisolator 1 jedoch auch durch Biegemomente belastet, die stets aussen am jeweiligen Übergang zwischen der Eingussarmatur 2 und dem Isolatorkörper 5 am grössten sind. Durch die angeformte Lippe 10 wird die Spannungsverteilung zwischen der Eingussarmatur 2 und dem Isolatorkörper 5 an dieser Stelle so verbessert, dass dort bei den zu erwartenden maximalen Biegemomenten keine Ablösungserscheinungen auftreten können. Der sich verjüngende Querschnitt der Lippe 10 kann keine der auf den Isolatorkörper 5 einwirkenden Biegespannungen bis nach aussen zum dünnen Ende der Lippe 10 übertragen, sodass diese Randzone gegenüber dem eigentlichen Isolatorkörper 5 mechanisch entkoppelt ist. Die Haftung des Isolatorkörpers 5 auf der Mantelfläche 4 ist so stark, dass es trotz der einwirkenden Biegemomente nicht zu Ablösungen zwischen der Eingussarmatur 2 und dem Isolatorkörper 5 kommt. Auf diese Art wird das im Zusammenhang mit derartigen Ablösungserscheinungen stets auftretende Versagen des Stützisolators mit grosser Sicherheit vermieden.

Nach dem gleichen Prinzip lässt sich auch die Umbruchfestigkeit von säulenförmig ausgebildeten Stützisolatoren steigern.

### BEZEICHNUNGSLISTE

- 1: Stützisolator
- 2: Eingussarmatur
- 3: Stirnfläche
- 4: Mantelfläche
- 5: Isolatorkörper
- 6: Welle
- 7: Elektrode
- 8: Radius
- 9: Linie
- 10: Lippe
- 11: Nut
- 12,13: Flanke
- 14: Nutgrund
- a: Abstand

## Patentansprüche

1. Stützisolator (1) mit einem scheibenförmigen Isolatorkörper (5) aus gehärtetem Giessharz und mit mindestens einer mit Hochspannung beaufschlagten, in den Isolatorkörper (5) eingegossenen und diesen durchdringenden Eingussarmatur (2), welche eine zylindrisch ausgebildete Mantelfläche (4) aufweist, welche der Isolatorkörper (5) umschliesst, wobei an den Isolatorkörper (5) eine sich nach aussen verjüngende Lippe (10) angeformt ist, dadurch gekennzeichnet,
- dass die Lippe (10) mit der Mantelfläche (4) der Eingussarmatur (2) innig verbunden ist, und
- dass die Lippe (10) als eine erste Flanke (12) einer in den Isolatorkörper (5) eingelassenen, die Eingussarmatur (2) konzentrisch umgebenden Nut (11) ausgebildet ist.

2. Stützisolator nach Anspruch 1, dadurch gekennzeichnet,
- dass die Nut (11) einen als U-Profil ausgebildeten Querschnitt aufweist, und
- dass das U-Profil frei von Kerben ausgebildet ist.

3. Stützisolator nach einem der voranstehenden Ansprüche dadurch gekennzeichnet,
- dass die Eingussarmatur (2) aus einem elektrisch gut leitfähigen Metall oder einer Metallegierung gefertigt ist,
- dass die Eingussarmatur (2) eine versilberte Oberfläche aufweist, und
- dass die Mantelfläche (4) der Eingussarmatur (2) vor dem Eingiessen in den Isolatorkörper (5) aufgerauht und mit einem entfettenden Lösungsmittel gereinigt wird.

4. Stützisolator nach Anspruch 1, dadurch gekennzeichnet,
- dass ein aussen liegender Bereich der Mantelfläche als Radius (8) ausgebildet ist.

## Claims

1. Supporting insulator (1) having an insulator body (5) which is in the form of a disc and is made of cured casting resin, and having at least one cast-in fitting (2) to which high voltage is applied and which is cast in the insulator body (5), passes through said insulator body (5) and has a cylindrically constructed outer surface (4) which the insulator body (5) encloses, a lip (10) which tapers outwards being integrally formed on the insulator body (5), characterized
- in that the lip (10) is closely connected to the outer surface (4) of the cast-in fitting (2), and
- in that the lip (10) is constructed as a first flank (12) of a groove (11) which is incorporated in the insulator body (5) and concentrically surrounds the cast-in fitting (2).

2. Supporting insulator according to Claim 1, characterized
- in that the groove (11) has a cross-section which is constructed as a U-profile, and
- in that the U-profile is constructed to be free of notches.

3. Supporting insulator according to one of the preceding claims, characterized
- in that the cast-in fitting (2) is manufactured from an electrically highly conductive metal or from a metal alloy,
- in that the cast-in fitting (2) has a silver-plated surface, and
- in that the outer surface (4) of the cast-in fitting (2) is roughened and cleaned using a degreasing solvent before being cast in the insulator body (5).

4. Supporting insulator according to Claim 1, characterized
- in that a region of the outer surface located on the outside is constructed as a radius (8).

## Revendications

1. Isolateur de support (1) muni d'un corps d'isolateur (5) en forme de disque en résine de moulage durcie et d'au moins une armature de coulée (2) moulée dans le corps d'isolateur (5), exposée à la haute tension et qui traverse celui-ci, laquelle présente une surface d'enveloppe (4) cylindrique, laquelle est entourée par le corps d'isolateur (5), une lèvre (10) se rétrécissant vers l'extérieur étant façonnée sur le corps d'isolateur (5), caractérisé par le fait
- que la lèvre (10) est en liaison étroite avec la surface d'enveloppe (4) de l'armature de coulée (2), et
- que la lèvre (10) est réalisée sous la forme d'un premier flanc (12) d'une rainure (11) noyée dans le corps d'isolateur (5) et entourant l'armature de coulée (2) de manière concentrique.

2. Isolateur de support selon la revendication 1, caractérisé par le fait
- que la rainure (11) présente une section en forme de profilé en U, et
- que le profilé en U est dépourvu de toute entaille.

3. Isolateur de support selon l'une des revendications précédentes, caractérisé par le fait
- que l'armature de coulée (2) est fabriquée dans un métal ou un alliage métallique bon conducteur d'électricité,
- que l'armature de coulée (2) présente une surface argentée, et
- que la surface d'enveloppe (4) de l'armature de coulée (2) est rendue rugueuse puis nettoyée avec un solvant dégraissant avant le moulage dans le corps d'isolateur (5).

4. Isolateur de support selon la revendication 1, caractérisé par le fait
- qu'une zone extérieure de la surface d'enveloppe est réalisée sous la forme d'un rayon (8).
